# EUROPÄISCHE PATENTSCHRIFT

(11) **EP 3 219 645 B1**
(45) Veröffentlichungstag und Bekanntmachung des Hinweises auf die Patenterteilung: **15.12.2021**
(21) Anmeldenummer: 17158303.2
(22) Anmeldetag: 28.02.2017
(51) Int. Cl.: B65G 15/62

(54) **FÖRDEREINRICHTUNG MIT GENEIGTEM FÜHRUNGSSTRANG**
CONVEYOR WITH INCLINED GUIDING MEANS
CONVOYEUR MUNI DE GUIDES INCLINÉS

(30) Priorität: 15.03.2016 DE 102016104768
(43) Veröffentlichungstag der Anmeldung: 20.09.2017
(73) Patentinhaber: Illinois Tool Works, Inc., Glenview, Illinois 60025 (US)
(72) Erfinder: WÖHLE, Linus, 48480 Schapen (DE)
(74) Vertreter: Trinks, Ole

(56) Entgegenhaltungen:
- WO-A1-92/11191
- DE-A1-102015 106 096
- DE-C1- 3 619 949
- US-B1- 6 848 572

## Beschreibung

Die Erfindung betrifft eine Fördereinrichtung mit einem endlos umlaufenden Fördermittel, das im Vorlauf ein oberes Trum und im Rücklauf ein unteres Trum ausbildet und dessen zumindest oberes Trum mit seiner Unterseite in einer Führung geführt ist.

Eine solche Fördereinrichtung ist beispielsweise aus der DE 40 30 362 A1 bekannt. Bei dieser Fördereinrichtung werden beide Trume seitlich in Schienen geführt. Zur Führung sind in den Kettengliedern Nuten eingebracht, in die die Schienen eingreifen. Insbesondere wenn hohe Fördergeschwindigkeiten realisiert werden müssen und/oder über weite Strecken mit nur einem Fördermittel gefördert werden soll, muss auch das untere Trum geführt werden, damit es nicht durch sein Eigengewicht durchhängt und flattert, was zu Geräuschen und innerem Verschleiß des Fördermittels führt. Hierzu ist jedes Kettenglied mit einer zentralen Längsnut versehen, über das es in einer mittigen Schiene geführt wird. Die Schiene liegt vollflächig in der Längsnut. Durch die Reibung ist Verschleiß unvermeidbar, dieser wird aber drastisch erhöht, wenn die Längsnut, die im oberen Trum offen liegt, verschmutzt. Staub bildet dann, wenn das Kettenglied im unteren Trum läuft, abrasive Partikel. DE 36 19 949 C1 offenbart außerdem eine Vorrichtung gemäß dem Oberbegriff des Anspruchs 1.

Der Erfindung liegt die Aufgabe zugrunde, die gattungsgemäße Fördereinrichtung so fortzubilden, dass eine Führung beider Trume möglichst verschleißarm erfolgt. Zur Problemlösung zeichnet sich eine gattungsgemäße Fördereinrichtung durch den kennzeichnenden Teil des Anspruchs 1 aus.

Durch diese Ausgestaltung liegt das obere Trum, auf dessen Sichtseite die Produkte gefördert werden, großflächig auf dem oberen Führungsstrang auf und wird sicher abgestützt. Das untere Trum liegt mit der Sichtseite nach unten im unteren Führungsstrang. Dadurch, dass der untere Führungsstrang zum Fördermittel in einem Winkel geneigt ist, ist das Fördermittel nur im Bereich seiner Längskante in Berührung mit dem Förderstrang, wodurch Flattern und Durchhängen des Fördermittels vermieden wird. Durch die Neigung des unteren Förderstrangs wird verhindert, dass sich Schmutz festsetzen kann und in der Führung abrasive Partikel bildet, sodass ein Verschleiß an der Sichtseite sicher vermieden wird.

Wenn der Führungsstrang durch in der Führung ausgebildete zwei obere Absätze und zwei untere Absätze gebildet wird, kann dieser zweiteilig ausgeführt werden. Die unteren Absätze sind dann vorzugsweise im Winkel einander entgegengerichtet geneigt. Das untere Trum wird dann beidseitig auf der Sichtseite geführt und liegt in zwei parallelen Linien an dem Führungsstrang an. Hierdurch wird die Führung verbessert und das Flatterverhalten des unteren Trums weiter verbessert. Der durch die Reibung unvermeidbare Verschleiß wird dadurch reduziert, dass das untere Trum nur linienförmig Berührung mit dem Führungsstrang hat. Diese liegt bauartbedingt durch die Neigung der Führung möglichst weit außen, sodass eine Beeinträchtigung der Aufstandsfläche für die Produkte im oberen Trum nicht gegeben ist.

Der Winkel beträgt vorzugsweise zwischen 1° und 10° und insbesondere zwischen 1° und 3°, weiterhin vorzugsweise 3°. Der Winkel sollte so groß gewählt werden, dass Staub und dergleichen von den Absätzen sicher abgleiten kann, sodass sich keine Schmutzschicht ausbildet, die in Kontakt zu der Sichtseite des Fördermittels gelangt. Durch die zueinander entgegengerichtet geneigten Absätze bildet sich in der Führung ein Kanal aus, in dem bei hoher Fördergeschwindigkeit durch das Zugmittel eine Luftströmung entsteht, die, insbesondere, wenn Wirbel ausgebildet werden, leichte Verschmutzungen von den Absätzen herunterzieht.

Vorzugsweise ist zwischen dem unteren Trum und dem unteren Führungsstrang ein Schmierfilm vorgesehen, um die Reibung in der Führung zu reduzieren. Durch den Kapillareffekt zieht sich der Schmierfilm über die Sichtseite des Fördermittels und reduziert damit die Reibung zwischen den Produkten und dem Fördermittel.

Der Führungsstrang kann bevorzugt aus einer Mehrzahl von Führungselementen zusammengesetzt sein, die im Querschnitt identisch ausgebildet sind. Hierzu ist es vorteilhaft, wenn benachbarte Führungselemente über mindestens ein Verbindungselement zueinander zentriert und miteinander verbunden werden. Dann ist eine einfache und ausgerichtete Montage der Führungselemente gewährleistet und eine ebene Führungsfläche sowohl für das obere Trum als auch für das untere Trum erzielbar. Vorsprünge an den Stoßkanten der einzelnen Führungselemente werden dadurch vermieden, weil kein Höhenversatz der Führungselemente vorhanden ist, was einen ruhigen Lauf der Fördereinrichtung gewährleistet und auch den Verschleiß an dem Fördermittel und dem Führungsstrang nicht unnötig erhöht.

Vorzugsweise besteht die Führung aus Kunststoff und ist in einem sie seitlich umgebenden Gehäuse angeordnet.

Das Fördermittel kann eine im Raum gelenkige Kette sein, wie sie beispielsweise aus der EP 0 910 540 B1 oder der WO 94/26636 A1 bekannt ist oder auch ein Riemen bzw. Gurt sein.

Mit Hilfe einer Zeichnung soll ein Ausführungsbeispiel der Erfindung nachfolgend näher beschrieben werden. Es zeigen:
- Figur 1 -: die Draufsicht auf einen aus zwei parallel laufenden Fördereinrichtungen gebildeten Förderer;

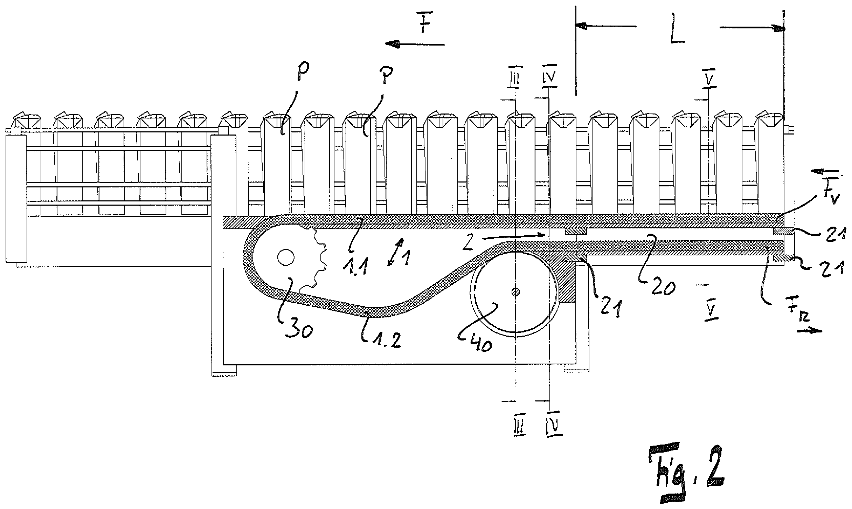

- Figur 2 -: den Schnitt entlang der Linie II-II nach Figur 1;
- Figur 3 -: den Schnitt entlang der Linie III-III nach Figur 2;
- Figur 4 -: den Schnitt entlang der Linie IV-IV nach Figur 2;
- Figur 5 -: den Schnitt entlang der Line V-V nach Figur 2.

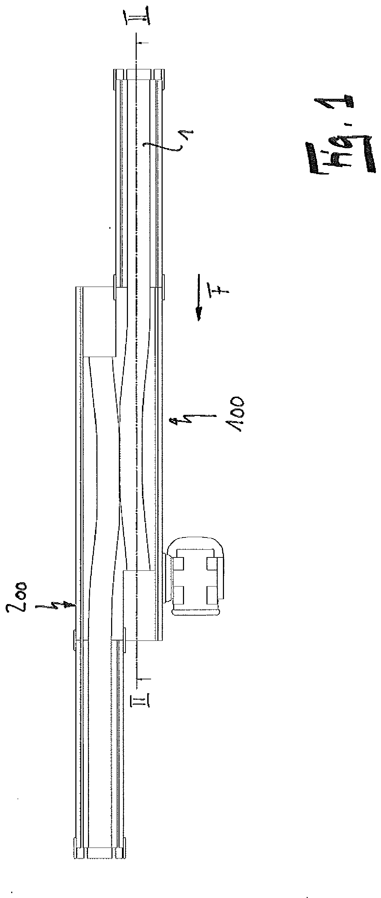

Die Fördereinrichtungen 100, 200 sind Teil eines aus mehreren Fördereinrichtungen gebildeten Förderers, auf dem eine Mehrzahl hintereinander angeordneter Produkte P in einer Förderrichtung F gefördert werden. Jede Fördereinrichtung 100, 200 ist separat angetrieben und in der in Figur 1 dargestellten Anordnung kommen zwei Fördereinrichtungen 100, 200 zusammen und bilden eine Weiche. Die auf der (in der Zeichnung unteren) Fördereinrichtung 100 angelieferten Produkte werden auf die eine kurze Strecke parallel hierzu angeordneten Fördereinrichtung 200 übergeben und dann in Förderrichtung F weitertransportiert.

Das Fördermittel 1, das beispielsweise ein Gurt oder eine Kette ist, wird endlos umlaufend angetrieben und bildet im Vorlauf FV ein oberes Trum 1.1 und im Rücklauf FR ein unteres Trum 1.2 aus, die beide in einer Führung 2 geführt werden. Die Führung 2 besteht aus zwei, sich in Längsrichtung (Länge L) erstreckende und parallel zueinander verlaufenden Schienen 2', 2" aus Kunststoff, die zwei aufeinander zugerichtete obere Absätze 2.1, 2.2 und zwei untere einander zugewandte Absätze 2.3, 2.4 aufweisen. Die oberen Absätze 2.1, 2.2 bilden einen oberen Führungsstrang und die unteren Absätze 2.3, 2.4 einen unteren Führungsstrang aus. Die beiden Schienen 2', 2" sind über Sicherungsmittel 3.3 zueinander fixiert.

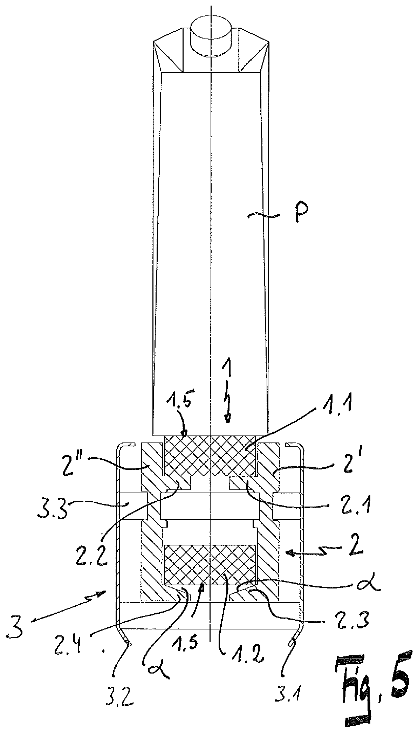

Wie Figur 5 zeigt, liegt das obere Trum 1.1 mit seiner Unterseite auf den parallel zum Fördermittel 1 verlaufenden Absätzen 2.1, 2.2 auf. Das untere Trum 1.2 liegt mit der Sichtseite 1.5 des Fördermittels 1 auf den unteren Absätzen 2.3, 2.4, die im Winkel α entgegengesetzt gerichtet zum Fördermittel 1 geneigt verlaufen, auf. Die Anlage des unteren Trums 1.2 auf dem unteren Führungsstrang 2.3, 2.4 ist linienförmig, wie Figur 5 erkennen lässt, sodass der Kontakt nur im äußeren Bereich stattfindet und nur dort ein Verschleiß entstehen kann. Die Flatterneigung des unteren Trums 1.2 wird hingegen verhindert. Durch die Neigung der Absätze 2.3, 2.4 wird eine Selbstzentrierung im unteren Trum 1.2 erreicht und somit ein Anlaufen an der Seitenwand verhindert. Auch kann das untere Trum 1.2 über die Länge L der Führung 2 nicht durchhängen. Der Winkel α, in dem die unteren Absätze 2.3, 2.4 geneigt verlaufen, ist so gewählt, dass sich zwischen dem unteren Trum 1.2 und dem Führungsstrang kein Schmutz festsetzen kann, der zur Reibung auf der Sichtseite 1.5 des Fördermittels 1 führen könnte. Er beträgt zwischen 1° und 10°. Eine Neigung im Winkel α von 3° hat sich als positiv herausgestellt. In der Zeichnung ist der Winkel α übertrieben dargestellt, um die Neigung der unteren Absätze 2.3, 2,4 deutlich hervorheben zu können.

Der Führungsstrang 2 wird von einem Gehäuse 3 seitlich umgeben, das aus zwei Gehäusehälften 3.1, 3.2 besteht. Die Gehäusehälften 3.1, 3.2 sind unten schräg abgewinkelt, sodass sich Flügel ausbilden. Der Führungsstrang 2 setzt sich aus mehreren miteinander verbundenen Führungselementen 20 zusammen. Zur Verbindung und Zentrierung benachbarter Führungselemente 20 sind Verbindungselemente 21 vorgesehen, die in in den Führungselementen 20 vorgesehenen Nuten eingesteckt werden können. Die Länge des Führungsstranges 2 und damit die Anzahl der Führungselemente 20 ist beliebig und abhängig von der Antriebsleistung die zur Verfügung gestellt werden kann.

Zwischen der Sichtseite 1.5 des unteren Trums 1.2 und dem unteren Führungsstrang 2.3, 2.4 ist ein Schmiermittel vorgesehen, das nur einen dünnen Film ausbildet, um Verschleiß an der linienförmigen Berührung zu vermeiden.

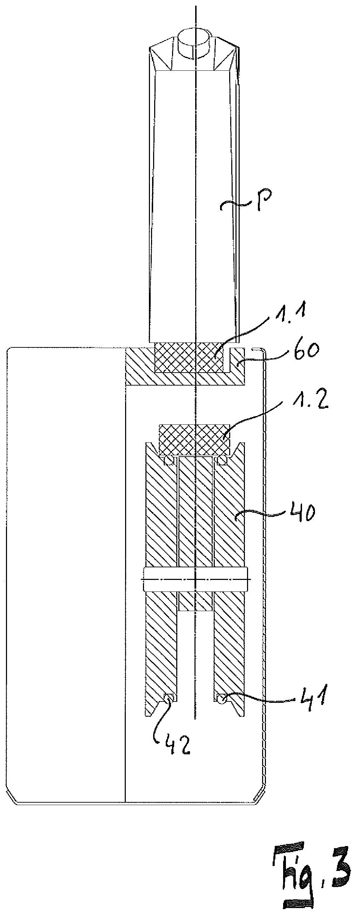

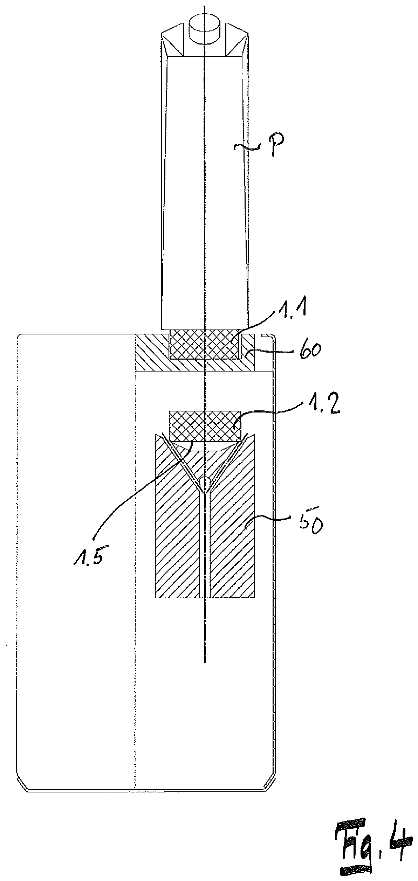

Das obere Trum 1.1 und das untere Trum 1.2 sollten möglichst dicht beieinander im Vorlauf FV und Rücklauf FR sein, um den Bauraum klein zu halten und auch damit den Wirkungsgrad der Fördereinrichtung zu erhöhen. Im Bereich der beidseitigen Antriebsräder 30 muss das untere Trum 1.2 aber weiter nach unten geführt werden, um den Umfang des Antriebsrades 30 zu erfassen. Hierzu sind Umlenkräder 40 vorgesehen. Diese Umlenkräder 40 sind über ihren Umfang ausgekehlt, wie Figur 3 zeigt. Zwei parallele Umfangsnuten, die hier nicht näher bezeichnet sind, nehmen Kunststoffringe 41, 42 auf, auf denen das untere Trum 1.2 mit der Sichtseite 1.5 aufliegt. Durch die Rundung der Ringe 41, 42 und der planen Sichtseite 1.5 wird das untere Trum 1.2 nur an zwei Punkten berührt, wodurch der Verschleiß an der Sichtseite 1.5 ebenfalls minimiert ist. Das obere Trum 1.1 liegt mit seiner Unterseite vollflächig in einer oberen Führung 60 auf. Im weiteren Verlauf erfolgt dann an der Übergabestelle zwischen dem Umlenkrad 40 und dem Führungselement 20 eine Führung des Fördermittels über die Führung 50, die, wie Figur 4 zeigt im Querschnitt V-förmig ausgebildet ist, sodass das untere Trum 1.2 des Fördermittels 1 wieder nur in seinem Randbereich linienförmig erfasst wird.

### Bezugszeichenliste

- 1: Fördermittel
- 1.1: oberes Trum
- 1.2: unteres Trum
- 1.5: Sichtseite
- 2: Führung
- 2.1: Führungsstrang/oberer Absatz
- 2.2: Führungsstrang/oberer Absatz
- 2.3: Führungsstrang/unterer Absatz
- 2.4: Führungsstrang/unterer Absatz
- 2': Schiene
- 2": Schiene
- 3: Gehäuse
- 3.1: Gehäuse
- 3.2: Gehäuse
- 3.3: Sicherungsmittel
- 20: Führungselement
- 21: Verbindungselement
- 30: Antriebsrad
- 40: Umlenkrad
- 41: Ring
- 42: Ring
- 50: Führung
- 60: Führung
- 100: Fördereinrichtung
- 200: Fördereinrichtung
- α: Winkel
- F: Förderrichtung
- FR: Rücklauf
- FV: Vorlauf
- L: Länge
- P: Produkt

## Patentansprüche

1. Fördereinrichtung mit einem endlos umlaufenden Fördermittel (1), das im Vorlauf (FV) ein oberes Trum (1.1) und im Rücklauf (FR) ein unteres Trum (1.2) ausbildet und dessen oberes Trum (1.1) mit der Unterseite des Fördermittels (1) und dessen unteres Trum (1.2) mit der Sichtseite (1.5) des Fördermittels (1) in einer Führung (2) geführt ist, wobei die Führung (2) mindestens einen oberen Führungsstrang (2.1, 2.2) sowie mindestens einen unteren Führungsstrang (2.3, 2.4) aufweist **dadurch gekennzeichnet, dass** im Querschnitt der Führung (2) der obere Führungsstrang (2.1, 2.2) parallel zum Fördermittel (1) und der untere Führungsstrang (2.3, 2.4) in einem Winkel (α) geneigt zum Fördermittel (1) verläuft.

2. Fördereinrichtung nach Anspruch 1,
wobei jeder Führungsstrang durch in der Führung (2) ausgebildete zwei obere Absätze (2.1, 2.2) und zwei untere Absätze (2.3, 2.4) gebildet wird.

3. Fördereinrichtung nach Anspruch 2,
wobei die beiden Absätze (2.1, 2.2; 2.3, 2.4) sich jeweils gegenüberliegen.

4. Fördereinrichtung nach Anspruch 3,
wobei die unteren Absätze (2.3, 2.4) im Winkel (α) einander entgegengerichtet geneigt sind.

5. Fördereinrichtung nach einem der vorstehenden Ansprüche,
wobei der Winkel (α) zwischen 1° und 10° beträgt.

6. Fördereinrichtung nach Anspruch 5,
wobei der Winkel (α) zwischen 1° und 3°, vorzugsweise 3° beträgt.

7. Fördereinrichtung nach einem der vorstehenden Ansprüche,
wobei zwischen dem unteren Trum (1.2) und dem unteren Führungsstrang (2.3, 2.4) ein Schmierfilm vorgesehen ist.

8. Fördereinrichtung nach einem der vorstehenden Ansprüche,
wobei die Führung (2) aus einer Mehrzahl von Führungselementen (20) zusammengesetzt ist, die im Querschnitt identisch ausgebildet sind.

9. Fördereinrichtung nach Anspruch 8,
wobei benachbarte Führungselemente (20) über mindestens ein Verbindungselement (21) zueinander zentriert und miteinander verbunden werden.

10. Fördereinrichtung nach einem der vorstehenden Ansprüche,
wobei die Führung (2) aus Kunststoff besteht und in einem sie seitlich umgebenden Gehäuse (3) angeordnet ist.

11. Fördereinrichtung nach einem der vorstehenden Ansprüche,
wobei das Fördermittel (1) ein Kette oder ein Riemen ist.

## Claims

1. A conveyor comprising an endlessly running conveying means (1) which forms an upper strand (1.1) in the forward run (FV) and a lower strand (1.2) in the return run (FR) and the upper strand (1.1) of which with the underside of the conveying means (1) and the lower strand (1.2) of which with the visible side (1.5) of the conveying means (1) is guided in a guide (2), wherein the guide (2) comprises at least one upper guide strand (2.1, 2.2) and at least one lower guide strand (2.3, 2.4), **characterized in that**,
in the cross-section of the guide (2), the upper guide strand (2.1, 2.2) extends parallel to the conveying means (1) and the lower guide strand (2.3, 2.4) extends inclined at an angle (α) to the conveying means (1).

2. The conveyor according to Claim 1,
wherein each guide strand is formed by two upper shoulders (2.1, 2.2) and two lower shoulders (2.3, 2.4) configured in the guide (2).

3. The conveyor according to Claim 2,
wherein the two shoulders (2.1, 2.2; 2.3, 2.4) are respectively opposite to one another.

4. The conveyor according to Claim 3,
wherein the lower shoulders (2.3, 2.4) are inclined in opposite directions at an angle (α).

5. The conveyor according to any one of the preceding claims, wherein the angle (α) is between 1° and 10°.

6. The conveyor according to Claim 5,
wherein the angle (α) is between 1° and 3°, preferably 3°.

7. The conveyor according to any one of the preceding claims,
wherein a lubricating film is provided between the lower strand (1.2) and the lower guide strand (2.3, 2.4).

8. The conveyor according to any one of the preceding claims,
wherein the guide (2) is composed of a plurality of guide elements (20), which are identical in cross-section.

9. The conveyor according to Claim 8,
wherein adjacent guide elements (20) are centered relative to one another and connected to one another via at least one connecting element (21).

10. The conveyor according to any one of the preceding claims,
wherein the guide (2) is made of plastic and is disposed in a housing (3) which surrounds it laterally.

11. The conveyor according to any one of the preceding claims, wherein the conveying means (1) is a chain or a belt.

## Revendications

1. Dispositif de transport comportant un moyen de transport circonférentiel sans fin (1) qui forme un tronçon supérieur (1.1) dans le trajet avant (FV) et un tronçon inférieur (1.2) dans le trajet de retour (FR) et dont le tronçon supérieur (1.1) avec la face inférieure du moyen de transport (1) et dont le tronçon inférieur (1.2) avec le côté visible (1.5) du moyen de transport (1) est guidé dans un guide (2), dans lequel le guide (2) comporte au moins un tronçon guide supérieur (2.1, 2.2) et au moins un tronçon guide inférieur (2.3, 2.4), **caractérisé en ce que**,
dans la section transversale du guide (2), le tronçon guide supérieur (2.1, 2.2) s'étend parallèlement au moyen de transport (1) et le tronçon guide inférieur (2.3, 2.4) s'étend incliné à un angle (α) par rapport au moyen de transport (1).

2. Dispositif de transport selon la revendication 1, dans lequel chaque tronçon guide est formé par deux épaulements supérieurs (2.1, 2.2) et deux épaulements inférieurs (2.3, 2.4) configurés dans le guide (2).

3. Dispositif de transport selon la revendication 2, dans lequel les deux épaulements (2.1, 2.2 ; 2.3, 2.4) sont respectivement opposés l'un par rapport à l'autre.

4. Dispositif de transport selon la revendication 3, dans lequel les épaulements inférieurs (2.3, 2.4) sont inclinés dans des directions opposées à un angle (α).

5. Dispositif de transport selon l'une quelconque des revendications précédentes,
dans lequel l'angle (α) est compris entre 1° et 10°.

6. Dispositif de transport selon la revendication 5, dans lequel l'angle (α) est compris entre 1° et 3°, de préférence 3°.

7. Dispositif de transport selon l'une quelconque des revendications précédentes,
dans lequel un film lubrifiant est fourni entre le tronçon inférieur (1.2) et le tronçon guide inférieur (2.3, 2.4).

8. Dispositif de transport selon l'une quelconque des revendications précédentes,
dans lequel le guide (2) est composé d'une pluralité d'éléments guide (20), qui sont identiques en coupe transversale.

9. Dispositif de transport selon la revendication 8, dans lequel des éléments guide adjacents (20) sont centrés les uns par rapport aux autres et reliés les uns par rapport aux autres via au moins un élément de liaison (21).

10. Dispositif de transport selon l'une quelconque des revendications précédentes,
dans lequel le guide (2) est fait en plastique et est disposé dans un logement (3) qui l'entoure latéralement.

11. Dispositif de transport selon l'une quelconque des revendications précédentes, dans lequel le moyen de transport (1) est une chaîne ou une courroie.
